# EUROPEAN PATENT SPECIFICATION

(11) **EP 3 046 230 B1**
(45) Date of publication and mention of the grant of the patent: **05.09.2018**
(21) Application number: 16151227.2
(22) Date of filing: 14.01.2016
(51) Int. Cl.: H02K 3/487, H02K 3/52

(54) **ROTOR WEDGE FOR GENERATOR**
ROTORKEIL FÜR EINEN GENERATOR
ANGLE DE ROTOR POUR GÉNÉRATEUR

(30) Priority: 16.01.2015 US 201514598713
(43) Date of publication of application: 20.07.2016
(73) Proprietor: Hamilton Sundstrand Corporation, Charlotte, NC 28217 (US)
(72) Inventor: DHAVAL, Patel, Loves Park, IL 61111 (US); MARTIN, Ted A., Byron, IL 61010 (US); BRUST, Eric A., Machesney Park, IL 61115 (US); SMITH, Doren C., Rockford, IL 61101 (US); KOESTER, Kevin J., Winnebago, IL 61088 (US); HUFSTEDLER, Glenn W., Loves Park, IL 61111 (US)
(74) Representative: Dehns

(56) References cited:
- US-A1- 2007 090 701
- US-A1- 2010 133 946
- US-A1- 2010 244 614

## Description

### BACKGROUND

The present disclosure relates to a generator and, in particular, to a main rotor of a generator.

Typically, a generator includes a rotor having a plurality of windings (made up of electrically conductive wires) wrapped around elongated poles on a rotor core. The rotor is driven to rotate by a source of rotation: a prime mover such as a turbine rotor. The generator rotor rotates in proximity to a stator, and the rotation of the rotor, which can be an electromagnet having electricity running through the windings, induces voltage in the stator. The voltage in the stator can be applied to external electrical components, providing electrical power to those components. During operation, the generator rotor rotates at very high speeds, creating centrifugal forces on the poles and windings that may cause the wires of the windings on the poles to become displaced.

In order to help prevent movement of the windings, improve the strength and reliability of the generator rotor, and minimize the amount of imbalance in the generator rotor that may result from movement of the windings, wedges may be inserted in between neighboring poles on the rotor core. The wedges serve as a physical barrier between poles to prevent movement of the wires of the windings and also stiffen the whole rotor structure by provide a support structure between poles. Because the generator rotor rotates at very high speeds, it is important that the wedges are light (i.e., low mass) and durable while also being simple to construct and install.

Rotor generators with wedges are taught in US 2010/133946 and US 2007/090701.

### SUMMARY

According to a first aspect, there is provided a wedge for use in a generator rotor as defined by claim 1.

According to another aspect, there is provided a rotor for a generator as defined in claim 11.

### BRIEF DESCRIPTION OF THE DRAWINGS

FIG. 1 is a schematic sectional view of a generator.
FIG. 2 is a perspective view of a main rotor assembly of the generator.
FIG. 3 is a perspective view of a wedge for the main rotor assembly.
FIG. 4 is a cross-sectional view of the wedge and a portion of a rotor core taken along sectional line A-A of FIG. 2.
FIG. 5 is a cross-sectional view of another embodiment of a wedge and a portion of a rotor core.

### DETAILED DESCRIPTION OF THE DRAWINGS

Disclosed herein is a wedge for a generator rotor. The wedge bridges a gap between adjacent poles on a rotor core and provides support to windings of the rotor core to help ensure the windings do not come unfurled/unwound. The wedge is light (i.e., low mass) and durable due to the wedge being one integral and monolithic piece. The wedge includes two contact surfaces and adjacent tabs at the two points of interaction between the wedge and two adjacent poles. The contact surfaces are in contact with each pole and transfer the stress/force caused by the rotation of the generator rotor (i.e., centrifugal force) between the windings and the poles. The contact surfaces are radially inward from a portion of each pole, while the tabs are radially outward from that same portion of each pole, which prevents the wedge from experiencing radial movement without the need for the wedge to be fastened to any component of the generator rotor. The tabs are shaped to conform to the radially outer surface of the poles so as to reduce the amount of aerodynamic drag on the tabs during rotation of the generator rotor. The wedge is simple and durable because the configuration of the contact surfaces places two inner surfaces of the triangular shaped wedge radially within the adjacent poles so that the two inner surfaces are in compression when the generator rotor rotates at high speeds. Additionally, because the wedge is a simple integral and monolithic configuration, the wedge can include multiple axial apertures that reduce the mass of the rotor, thus increasing the efficiency of the generator.

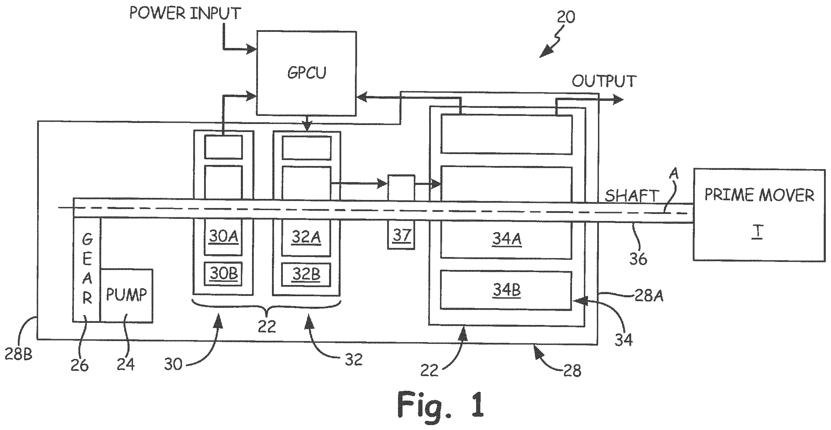

FIG. 1 is a schematic sectional view of a generator. Generator 20 is driven by prime mover T, which can be, for example, a gas turbine engine. Generator 20 produces electrical energy when being driven by prime mover T. Generator 20 generally includes dynamoelectric portion 22, positive displacement pump 24, and gearbox 26, all of which are contained within housing assembly 28. Although a variable frequency generator (VFG) is illustrated in the disclosed embodiment, it should be understood that other generator systems, such as a variable frequency starter generator (VFSG) and integrated drive generator (IDG), are also within the scope of the invention.

Dynamoelectric portion 22 in the disclosed, non-limiting embodiment is a three-phase machine that includes permanent magnet generator 30, main exciter 32, and main generator 34 (the three phases) mounted along rotor shaft 36, which rotates about axis of rotation A. Permanent magnet generator 30 includes rotor assembly 30A and stator assembly 30B, main exciter 32 includes rotor assembly 32A and stator assembly 32B, and main generator 34 includes rotor assembly 34A and stator assembly 34B. Stator assemblies 30B, 32B, and 34B are installed in housing assembly 28 and do not rotate while rotor assemblies 30A, 32A, and 34A are installed on rotor shaft 36 and rotate in unison. Housing assembly 28 can be closed at one end by drive-end cover assembly 28A through which rotor shaft 36 extends and at the other end by non-drive-end cover assembly 28B through which rotor shaft 36 does not extend.

Permanent magnet generator 30, with rotor assembly 30A and stator assembly 30B, supplies power for generator excitation, as well as power for other components of an electrical system. Main exciter 32, with rotor assembly 32A and stator assembly 32B, receives field excitation from permanent magnet generator 30 through the generator power control unit (GPCU). The output of main exciter 32 is supplied to rotor mounted diode pack 37. Diode pack 37 can be divided into six diodes to provide a three-phase full wave bridge rectification. The DC current output of diode pack 37 supplies main generator 34 with electricity. Main generator 34, with rotor assembly (main rotor assembly) 34A and stator assembly (main stator assembly) 34B, outputs power to supply external electrical energy needs.

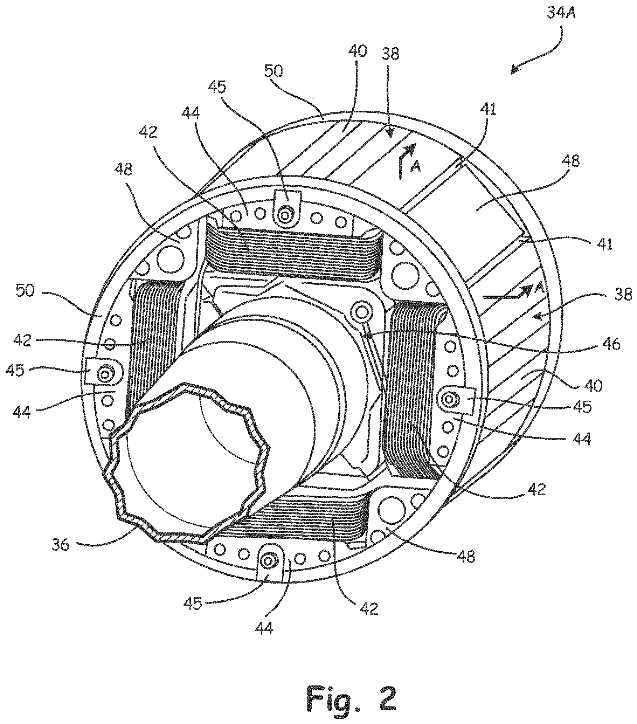

FIG. 2 is a perspective view of main rotor assembly 34A. Main rotor assembly 34A includes a portion of rotor shaft 36, rotor core 38 (which includes poles 40 having wings 41), windings 42, pole winding supports 44, retainer 45, end winding supports 46, wedges 48, and end bands 50.

As discussed above, main rotor assembly 34A is radially outward from and mounted on rotor shaft 36 so that main rotor assembly 34A rotates with rotor shaft 36 (which is driven by prime mover T) about axis of rotation A. Rotor shaft 36 can have a constant diameter along an axial length of rotor shaft 36 or can have a varying diameter depending on design considerations.

Rotor core 38 is radially outward from rotor shaft 36 and is the principal structural component of main rotor assembly 34A. Rotor core 38 is an annular radially inner element surrounding rotor shaft 36 and includes poles 40 (discussed below), which are radially extending outer elements. Rotor core 38 extends axially along rotor shaft 36 and rotates in unison with rotor shaft 36. Rotor core 38 can be made from a variety of suitable materials, including metal or another material than can handle the elevated temperatures and high centrifugal forces caused by the rotation of rotor assembly 34A.

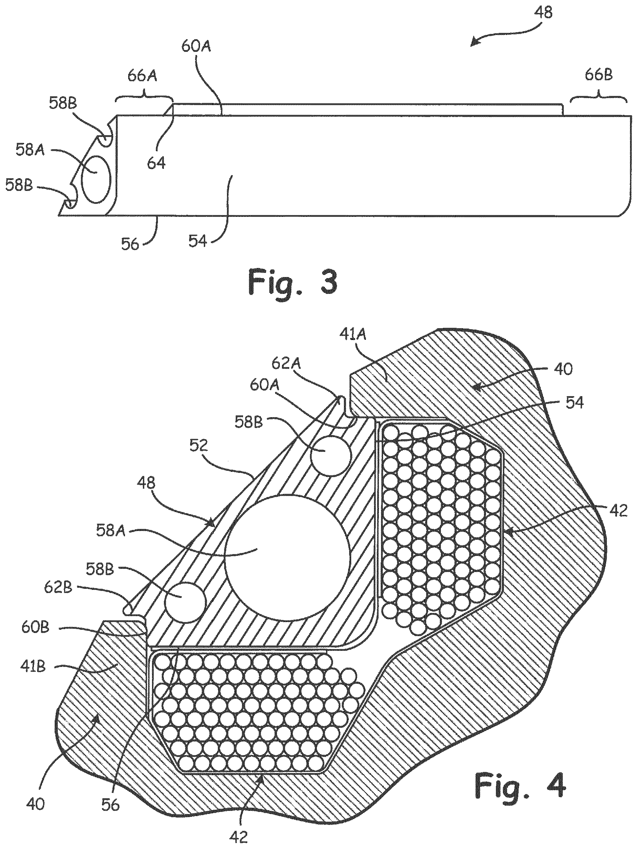

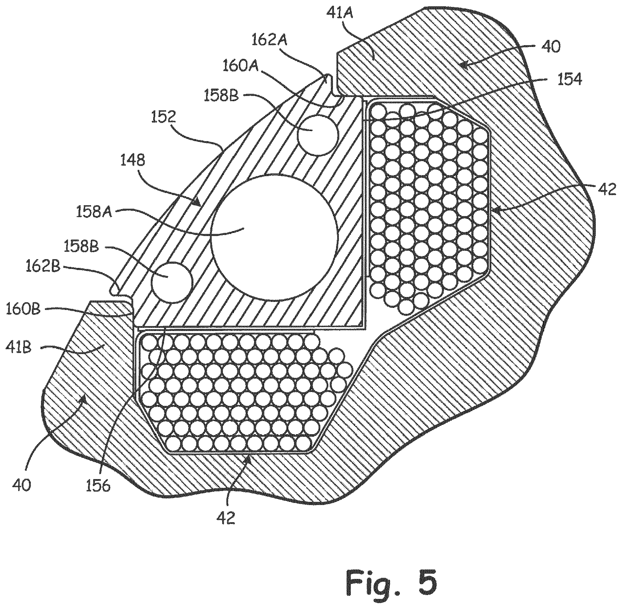

Poles 40 are radially extending components of rotor core 38. Poles 40 run axially along the outer side of rotor core 38 and can span the entire axial length of rotor core 38. Poles 40 can be made from the same material as rotor core 38, and rotor core 38 and poles 40 can be an integral and monolithic piece or multiple pieces bonded or bolted together. While FIG. 2 shows rotor core 38 having four poles 40, rotor core 38 can have a number of different configurations that include a different number of poles 40, such as configurations that include four, six, or eight poles 40. Poles 40 have a generally T shape with a stem (not shown in FIG. 2) that is adjacent to the radially inward body of rotor core 38 and wings 41 that extend circumferentially in both directions (as can be seen in FIGS. 4 and 5 as first wing 41A and second wing 41B). The outer surface of poles 40 can be curved so as to reduce aerodynamic drag on rotor core 38 when main rotor assembly 34A rotates at high speeds.

Wrapped around each of poles 40 are windings 42, which are each continuous wires that are electrically conductive and wrapped multiple times around poles 40. The wires of windings 42 can be arranged in a single layer on poles 40 or, as shown in FIGS. 4 and 5, can be multiple layers of wires. Windings 42 are each connected to diode pack 37, which provides windings 42 with DC current to energize windings 42 to act as an electromagnet. When generator 20 is in operation, rotor shaft 36, rotor core 38, poles 40, and electromagnetic windings 42 rotate and induce voltage in main stator assembly 34B which can be applied to load to output electrical energy.

Pole winding supports 44 are located on each axial end of poles 40 and are configured to hold the ends of each of windings 42 in place. Pole winding supports 44 also function to hold end winding supports 46 in place. While pole winding supports 44 are shown in FIG. 2 as being fastened to poles 40 by retainers 45, pole winding supports 44 can be fastened to poles 40 by other various means; including adhesive, bolts, rivets, latches, welds, or other fasteners; and can be made from a variety of materials, such as a material that is non-magnetic, including aluminum or plastic.

At each axial end of rotor core 38 (and poles 40) are end winding supports 46, which are configured to provide end support to windings 42 to help prevent the wires of windings 42 from becoming displaced due to the centrifugal forces exerted on windings 42 by the rotation of main rotor assembly 34A. End winding supports 46 can have an annular inner surface that is adjacent to rotor shaft 36 and a flat back surface that is fastened to rotor core 38 so that end winding supports 46 rotate with rotor core 38 when generator 20 is in operation. End winding supports 46 can be made from various suitable materials, including non-magnetic materials such as plastic or aluminum. End winding support 46 is fastened to rotor core 38 by various means, including adhesive, welds, bolts, rivets, latches, or other fasteners, and/or can be held adjacent to rotor core 38 by pole winding supports 44 (and retainers 45).

Wedges 48 are located between two adjacent poles 40. Each wedge 48 bridges the gap between poles 40 and provides support to windings 42 to ensure windings 42 do not become displaced during operation. The number of wedges 48 associated with main rotor assembly 34A depends on the number of poles 40, for there is at least one wedge 48 between adjacent poles 40. While FIG. 2 shows a configuration that includes four poles 40 with four wedges 48, other configurations can include a different number of poles 40 and wedges 48, such as configurations that includes four, six, or eight poles 40 and wedges 48. Each wedge 48 can be constructed from an integral and monolithic piece and can be made from various materials, including a non-magnetic material such as aluminum, titanium, or plastic. The material of wedge 48 should be suited to handle the high centrifugal forces and stresses imparted on wedge 48 by the rotation of main rotor assembly 34A and the contact of wedge 48 with poles 40 and windings 42. Wedges 48 should be strong enough to minimize deformation of wedges 48 in order to firmly hold windings 42 in place. Additionally, the material should be as light as possible (i.e., low mass) to increase the efficiency of main rotor assembly 34A.

As will be discussed in greater detail with regards to FIGS. 3, 4, and 5, wedge 48 can have a generally triangular cross-section that extends axially along the length of poles 40 and windings 42. While FIG. 2 shows wedges 48 as having a flat radially outer side 52, wedges 48 can have a curved outer surface that conforms to the curved out surface of adjacent poles 40 so as to give main rotor assembly 34A a cylindrical shape to reduce aerodynamic drag (shown in FIG. 5). Radially outer side 52 of wedge 48 can have another configuration, such as grooves or extensions, to allow for other components to be mounted to radially outer side 52. Wedge 48, and radially outer side 52, does not need to include bolts/bolt holes or other configurations needed to fasten wedge 48 to other components of main rotor assembly 34A because the configuration of the contacts surfaces and tabs (discussed in greater detail with regards to FIGS. 3, 4, and 5) help prevent wedge 48 from radial movement and end bands 50 help prevent wedge 48 from axial movement. The two inner surfaces of wedge 48 (second side 54 and third side 56) are each generally flat and are adjacent to windings 42. Wedges 48 can also include a number of axially extending apertures 58 (large aperture 58A and small apertures 58B) within wedges 48, which are intended to reduce the mass of wedges 48 to increase the efficiency of main rotor assembly 34A. Wedges 48 can have an axial length that is longer than poles 40 so that wedges 48 extend axially outward passed poles 40 at each end of poles 40. The portion of wedges 48 that extend outward passed poles 40 is radially inward from end bands 50 so as to be adjacent to and held in place by end bands 50 (discussed below).

Wedges 48 can be installed onto main rotor assembly 34A by being axially slid into place between adjacent poles 40 (end bands 50 are installed after wedges 48 are in place between poles 40). Wedges 48 are held in place radially by wings 41 on poles 40, which are positioned radially outward from first contact surface 60A and second contact surface 60B of wedge 48 (discussed in greater detail with regards to FIGS. 3, 4, and 5). Wedges 48 are also held radially in place by first tab 62A and second tab 62B, which are radially outward from wings 41 on poles 40. Wedges 48 are held in place axially by end bands 50.

End bands 50 can be annular rings on each end of main rotor assembly 34A. End bands 50 are the radially outermost components of main rotor assembly 34A and are configured to support pole winding supports 44 and hold wedges 48 in place. End bands 50 can each be an integral and monolithic piece or a number of rings or other components, and can be made from a variety of materials, including non-magnetic materials such as aluminum or plastic. The materials of end bands 50 should be able to handle the high centrifugal forces and stresses imparted on end bands 50 by the rotation of main rotor assembly 34A and the contact with poles 40, pole winding supports 44, retainers 45, and wedge 48. Like the other components of main rotor assembly 34A, end bands 50 should be as light as possible (i.e., low mass) to increase the efficiency of main rotor assembly 34A and generator 20. End bands 50 can have a rectangular cross-section or another cross-section, such as a triangular cross-section, suited to fit axially adjacent to poles 40 (and a portion of wedges 48) and radially outward from pole winding supports 44 (and a portion of wedges 48). End bands 50 can be fastened to poles 40, pole winding supports 44 and/or wedges 48 by various means, including glue, welds, bolts, rivets, latches, or other fasteners, and/or held in place by retainers 45, which help prevent end bands 50 from moving axially.

FIG. 3 is a perspective view of wedge 48, while FIG. 4 is a cross-sectional view of wedge 48 and a portion of poles 40, taken along section line A-A of FIG. 2. Shown in FIG. 3 is wedge 48, which includes radially outer side 52 (also called first side 52), second side 54, third side 56, apertures 58 (large aperture 58A and small apertures 58B), first contact surface 60A, second contact surface 60B, first tab 62A, second tab 62B, and shoulder 64 (caused by indents 66A and 66B). The interaction between wedge 48 and poles 40 shown in FIG. 4 includes poles 40 having wings 41 (first wing 41A and second wing 41B), windings 42, and wedge 48, which has radially outer side 52, second side 54, third side 56, large aperture 58A, small apertures 58B, first contact surface 60A, second contact surface 60B, first tab 62A, and second tab 62B.

As discussed above, wedge 48 has a generally triangular cross-section with radially outer side 52, second side 54, and third side 56. The disclosed embodiment shows wedge 48 with a cross-section that is a right triangle (with the 90 degree angle at the interface between second side 54 and third side 56), but wedge 48 can have a cross-section that is another shape, such as an acute triangle, an obtuse triangle, or a right triangle with the 90 degree angle at an interface between radially outer side 52 and second side 54 or radially outer side 52 and third side 56. Wedge 48 can also have other configurations, such as extensions, grooves, or other elements necessary for the mounting of other components on radially outer side 52. Wedge 48 does not need to include bolts/holes or other fasteners to attach wedge 48 to main rotor assembly 34A because the arrangement of first contact surface 60A and second contact surface 60B, along with first tab 62A and second tab 62B, in relation to first wing 41A and second wing 41A helps prevent wedge 48 from radial movement, while end bands 50 help prevent wedge 48 from axial movement.

Wedge 48 can include a number of apertures 58, such as large aperture 58A and small apertures 58B, that extend axially along wedge 48. In the disclosed embodiment, apertures 58 are cylindrical holes that are designed to reduce the mass of wedge 48 to increase the efficiency of generator 20. While FIGS. 2, 3, 4, and 5 show the openings as one large aperture 58A and two small apertures 58B, wedge 48 can include any number of openings having a variety of configurations, including one large aperture 58A or a number of small apertures 58B. However, apertures 58 should not be so extensive as to compromise the structure integrity of wedge 48 so that wedge 48 does not meet the required strength and rigidity needs.

Radially outer side 52 is the radially outermost surface of wedge 48 and is shown as a generally flat surface, but can have a curved or other configuration (as shown in FIG. 5). Radially outer side 52 bridges the gap between the radially outermost edges of rotor core 38/poles 40 (i.e., the space between first wing 41A and second wing 41B). Radially outer side 52 can extend along the total axial length of wedge 48 or, as shown in FIG. 3, can have first indent 66A and second indent 66B at each end of wedge 48 such that radially outer side 52 does not extend to each end of wedge 48, but rather ends at shoulders 64. First indent 66A and second indent 66B can be configured such that first indent 66A and second indent 66B are the same axial length as an axial width of end bands 50 so that end bands 50 firmly hold wedge 48 in place, axially, by being adjacent to shoulders 64 near each end of radially outer side 52. Additionally, first indent 66A and second indent 66B can have different depths or can have a depth that is equal to a height of first tab 62A and second tab 62B (discussed below). The axial length of first indent 66A and second indent 66B correspond to the axial length of poles 40 (and wings 41) so that the portion of radially outer side 52 between shoulders 64 is equal in length to the length of poles 40.

Second side 54 and third side 56 are the two radially inner sides of wedge 48 that are adjacent to windings 42 on each of the adjacent poles 40. Second side 54 and third side 56 are configured to support windings 42 to ensure the individual wires of windings 42 do not become displaced during operation of generator 20. Second side 54 and third side 56 extend axially along the total length of wedge 48 and extend axially outward passed poles 40 to be radially within end bands 50. Second side 54 and third side 56 can have flat surfaces or grooved surfaces in which the wires of windings 42 sit and are held in place. The interface between second side 54 and third side 56 can form a right angle in which second side 54 and third side 56 interest at a point (as shown in FIG. 5) or, as shown in FIGS. 3 and 4, the interface can be a curved surface. Second side 54 and third side 56 are flat and arranged so as to provide support to two adjacent windings 42 on one surface of windings 42, and do not push windings 42 from another direction (aside from radially inward) when rotor core 38 (and poles 40, windings 42, and wedge 48) is rotating.

At an interface between radially outer side 52 and second side 54 is first contact surface 60A, and at an interface between radially outer side 52 and third side 56 is second contact surface 60B. First contact surface 60A and second contact surface 60B extend axially along wedge 48 for the length of radially outer side 52. First contact surface 60A is radially inward of and in contact with first wing 41A on one pole 40. First contact surface 60A is arranged such that at least a portion of second side 54 is radially within first wing 41A so that wedge 48 is prevented from moving radially outward and stress/force is transferred from wedge 48 to first wing 41A. Second contact surface 60B is radially inward of and in contact with second wing 41B on another pole 40. Second contact surface 60B is arranged such that at least a portion of third side 56 is radially within second wing 41B so that wedge 48 is prevented from moving radially outward and stress/force is transferred from wedge 48 to first wing 41A. Because first contact surface 60A and second contact surface 60B are radially within first wing 41A and second wing 41B, respectively, wedge 48 is prevented from moving radially outward when main rotor assembly 34A rotates at high speeds, allowing wedge 48 to support windings 42 and keep windings 42 from becoming displaced by transferring stresses/forces from windings 42 to first wing 41A and second wing 41B through first contact surface 60A and second contact surface 60B. The forces on wedge 48 place second side 54 and third side 56 in compression and radially outer side 52 in tension. Because second side 54 and third side 56 of wedge 48 are in compression (as opposed to tension), wedge 58 can handle an increased amount of force/stress, making wedge 48 more durable and resistant to damage.

First tab 62A is at an interface between first contact surface 60A and radially outer side 52, and second tab 62B is at an interface between second contact surface 60B and radially outer side 52. First tab 62A and second tab 62B are projections that extend away from first contact surface 60A and second contact surface 60B, respectively, and extend axially along wedge 48 for the length of radially outer side 52. First tab 62A is radially outward from first wing 41A, and second tab 62B is radially outward from wing 41B. First tab 62A and second tab 62B are arranged so that wedge 48 is prevented from moving radially inward because wedge 48 (first tab 62A and second tab 62B) contacts first wing 41A and second wing 41B. First tab 62A and second tab 62B have a generally pointed tip to provide a smooth transition from first tab 62A to wing 41A and from second tab 62B to wing 41B to reduce aerodynamic drag when main rotor assembly 34A rotates.

First contact surface 60A, along with first tab 62A, and second contact surface 60B along with second tab 62B, can form a stair-stepping configuration between radially outer side 52 and second side 54 and between radially outer side 52 and third side 56, respectively. First contact surface 60A, first tab 62A, second contact surface 60B, and second tab 62B work together to transfer stress/force between poles 40 (first wing 41A and second wing 41B) and windings 42 while also helping prevent wedge 48 from radial movement.

FIG. 5 is a cross-sectional view of another embodiment of a wedge and a portion of a rotor core taken along section line A-A of FIG. 2. The interaction between wedge 148 and poles 40 shown in FIG. 5 includes poles 40 having wings 41 (first wing 41A and second wing 41B), windings 42, and wedge 148, which has radially outer side 152, second side 154, third side 156, large aperture 158A, small apertures 158B, first contact surface 160A, second contact surface 160B, first tab 162A, and second tab 162B.

Wedge 148 has a similar configuration and capabilities to wedge 48 of FIG. 4, but wedge 148 has radially outer surface 152 that is curved so as to conform to the curved out surface of adjacent poles 40 so as to give main rotor assembly 34A a cylindrical shape to reduce aerodynamic drag. Additionally, second side 154 and third side 156 meet at a point to form a right angle, which can provide additional flat surface area along each of second side 154 and third side 156 to aid in providing support to windings 42. Second side 154 and third side 156 meeting at a point can also make construction of wedge 148 easier and quicker.

As discussed above, wedge 48 bridges a gap between adjacent poles 40 on rotor core 38 and provides support to windings 42 of the rotor core 38 to help ensure windings 42 do not come unfurled/unwound. Wedge 48 is light (i.e., low mass) due in part to apertures 58 (large aperture 58A and small apertures 58B) and durable due to wedge 48 being one integral and monolithic piece. Wedge 48 includes first contact surface 60A and second contact surface 60B and adjacent first tab 62A and second tab 62B at the two points of interaction between wedge 48 and two adjacent poles 40 (first wing 41A and second wing 41B). First contact surface 60A and second contact surface 60B are in contact with first wing 41A and second wing 41B, respectively, and transfer the stress/force caused by the rotation of main rotor assembly 34A (i.e., centrifugal force) between windings 42 and poles 40. First contact surface 60A and second contact surface 60B are radially inward from first wing 41A and second wing 41B, respectively, while first tab 62A and second tab 62B are radially outward from first wing 41A and second wing 41B, respectively, which prevents wedge 48 from experiencing radial movement without the need for wedge 48 to be fastened to any component of main rotor assembly 34A. First tab 62A and second tab 62B are shaped to conform to the radially outer surface of poles 40 so as to reduce the amount of aerodynamic drag on first tab 62A and second tab 62B during rotation of main rotor assembly 34A. Wedge 48 is simple and durable because the configuration of first contact surface 60A and second contact surface 60B places second side 54 and third side 56 radially within first wing 41A and second wings 41B such that second side 54 and third side 56 are in compression when main rotor assembly 34A rotates at high speeds. Additionally, because wedge 48 is a simple integral and monolithic configuration, wedge 48 can include multiple axial apertures 58 that reduce the mass of main rotor assembly 34A, thus increasing the efficiency of generator 20.

### Discussion of Possible Embodiments

The following are non-exclusive descriptions of possible embodiments of the present invention.

A wedge for use in a generator rotor includes a wedge body extending for an axial length and having a generally triangular cross-section, a first side of the wedge body extending for the axial length of the wedge body, a second side of the wedge body extending for the axial length of the wedge body and having a generally flat surface, a third side of the wedge body extending for the axial length of the wedge body and having a generally flat surface with the third side being at a 90 degree angle to the second side and equal in length to the second side, a first contact surface adjacent to the second side at an interface between the first side and the second side, a second contact surface adjacent to the third side at an interface between the first side and the third side, a first tab extending outward from the first contact surface at a location between the first contact surface and the first side, and a second tab extending outward from the second contact surface at a location between the second contact surface and the second side with the second tab having an equal height to the first tab.

The wedge of the preceding paragraph can optionally include, additionally and/or alternatively, any one or more of the following features, configurations and/or additional components:
At least one axially extending aperture in the wedge body to reduce the mass of the wedge.

The at least one axially extending aperture is three apertures with one aperture being larger in diameter than the other two apertures.

An interface between the second side and the third side is a curve surface.

The wedge is constructed from a non-magnetic material.

The first contact surface and the first tab form a stair-stepping configuration between the first side and the second side and the second contact surface and the second tab form a stair-stepping configuration between the first side and the third side.

A first indent located on the first side between the first contact surface and the second contact surface and extending from a first end of the wedge axially inward, and a second indent located on the first side between the first contact surface and the second contact surface and extending from a second end of the wedge axially inward.

A depth of the first indent is equal to a depth of the second indent.

The depth of the first indent and the depth of the second indent is equal to a height of the first tab and a height of the second tab.

The wedge is a monolithic piece.

The first side is a generally smooth, uninterrupted surface.

A rotor for a generator includes a shaft, a rotor core radially outward from the shaft and having a plurality of poles spanning axially along the rotor core, a plurality of windings wrapped axially around each of the plurality of poles, and a plurality of wedges with each wedge being positioned between two adjacent poles of the plurality of poles and each wedge having a generally triangular cross-section that extends axially along the length of the rotor core. The wedge includes a first side forming a radially outermost surface of the wedge, a second side having a generally flat surface adjacent to a first winding, a third side having a generally flat surface adjacent to a second winding with the third side being at a 90 degree angle to the second side and equal in length to the second side, a first contact surface adjacent to the second side at an interface between the first side and the second side with the first contact surface in contact on a radially outer surface with a first pole of the two adjacent poles, a second contact surface adjacent to the third side at an interface between the first side and the third side with the second contact surface in contact on a radially outer surface with a second pole of the two adjacent poles, a first tab extending outward from the first contact surface at a location between the first contact surface and the first side with the first tab being radially outward from the first contact surface and a portion of the first pole, and a second tab extending outward from the second contact surface at a location between the second contact surface and the first side with the second tab being equal in height to the first tab and radially outward from the second contact surface and a portion of the second pole.

The rotor of the preceding paragraph can optionally include, additionally and/or alternatively, any one or more of the following features, configurations and/or additional components:
Each wedge of the plurality of wedges is a monolithic piece.

A first indent located on the first side between the first contact surface and the second contact surface and extending from a first end of the wedge axially inward and a second indent located on the first side between the first contact surface and the second contact surface and extending from a second end of the wedge axially inward.

The rotor core has four poles spanning axially along the rotor core.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A wedge (48) for use in a generator rotor comprising:
a wedge body extending for an axial length and having a generally triangular cross-section;
a first side (52) of the wedge body extending for the axial length of the wedge body;
a second side (54) of the wedge body extending for the axial length of the wedge body and having a generally flat surface;
a third side (56) of the wedge body extending for the axial length of the wedge body and having a generally flat surface, the third side being at a 90 degree angle to the second side and equal in length to the second side;
a first contact surface (60A) adjacent to the second side at an interface between the first side and the second side;
a second contact surface (60B) adjacent to the third side at an interface between the first side and the third side;
a first tab (62A) extending outward from the first contact surface at a location between the first contact surface and the first side; and
a second tab (62B) extending outward from the second contact surface at a location between the second contact surface and the second side, the second tab having an equal height to the first tab,
**characterized in that** the first contact surface and the first tab form a stair-stepping configuration between the first side and the second side and the second contact surface and the second tab form a stair-stepping configuration between the first side and the third side.

2. The wedge of claim 1, further comprising:
at least one axially extending aperture (58) in the wedge body to reduce the mass of the wedge.

3. The wedge of claim 2, wherein the at least one axially extending aperture is three apertures with one aperture being larger in diameter than the other two apertures.

4. The wedge of claim 1, 2 or 3, wherein an interface between the second side and the third side is a curve surface.

5. The wedge of any preceding claim, wherein the wedge is constructed from a non-magnetic material.

6. The wedge of any preceding claim, further comprising:
a first indent (66A) located on the first side between the first contact surface and the second contact surface and extending from a first end of the wedge axially inward; and
a second indent (66B) located on the first side between the first contact surface and the second contact surface and extending from a second end of the wedge axially inward.

7. The wedge of claim 6, wherein a depth of the first indent is equal to a depth of the second indent.

8. The wedge of claim 7, wherein the depth of the first indent and the depth of the second indent is equal to a height of the first tab and a height of the second tab.

9. The wedge of any preceding claim, wherein the wedge is a monolithic piece.

10. The wedge of any preceding claim, wherein the first side is a generally smooth, uninterrupted surface.

11. A rotor for a generator comprising:
a shaft (36);
a rotor core (38) radially outward from the shaft and having a plurality of poles (40) spanning axially along the rotor core;
a plurality of windings (42) wrapped axially around each of the plurality of poles; and
a plurality of wedges (48) as claimed in any preceding claim, each wedge being positioned between two adjacent poles of the plurality of poles, each wedge having a generally triangular cross-section that extends axially along the length of the rotor core.

12. The rotor of claim 11, wherein the rotor core has four poles spanning axially along the rotor core.

## Patentansprüche

1. Keil (48) zur Verwendung in einem Generatorrotor, der Folgendes umfasst:
einen Keilkörper, der sich auf eine axiale Länge erstreckt, und einen im Allgemeinen dreieckigen Querschnitt aufweist;
eine erste Seite (52) des Keilkörpers, die sich auf die axiale Länge des Keilkörpers erstreckt;
eine zweite Seite (54) des Keilkörpers, die sich auf die axiale Länge des Keilkörpers erstreckt und eine im Allgemeinen flache Fläche aufweist;
eine dritte Seite (56) des Keilkörpers, die sich auf die axiale Länge des Keilkörpers erstreckt und eine im Allgemeinen flache Fläche aufweist, wobei die dritte Seite sich in einem 90-Grad-Winkel zu der zweiten Seite befindet und in ihrer Länge gleich der zweiten Seite ist;
eine erste Kontaktfläche (60A) benachbart der zweiten Seite an einer Schnittstelle zwischen der ersten Seite und der zweiten Seite;
eine zweite Kontaktfläche (60B) benachbart der dritten Seite an einer Schnittstelle zwischen der ersten Seite und der dritten Seite;
eine erste Nase (62A), die sich nach außen von der ersten Kontaktfläche an einer Stelle zwischen der ersten Kontaktfläche und der ersten Seite erstreckt; und
eine zweite Nase (62B), die sich nach außen von der zweiten Kontaktfläche an eine Stelle zwischen der zweiten Kontaktfläche und der zweiten Seite erstreckt, wobei die zweite Nase die gleiche Höhe aufweist wie die erste Nase,
**dadurch gekennzeichnet, dass** die erste Kontaktfläche und die erste Nase eine Treppenversatzkonfiguration zwischen der ersten Seite und der zweiten Seite bilden, und die zweite Kontaktfläche und die zweite Nase eine Treppenversatzkonfiguration zwischen der ersten Seite und der dritten Seite bilden.

2. Keil nach Anspruch 1, ferner umfassend:
wenigstens eine sich axial erstreckende Öffnung (58) in dem Keilkörper, um die Masse des Keils zu reduzieren.

3. Keil nach Anspruch 2, wobei die wenigstens eine sich axial erstreckende Öffnung aus drei Öffnungen besteht, wobei eine Öffnung im Durchmesser größer ist als die anderen beiden Öffnungen.

4. Keil nach Anspruch 1, 2 oder 3, wobei eine Schnittstelle zwischen der zweiten Seite und der dritten Seite eine gekrümmte Fläche ist.

5. Keil nach einem der vorhergehenden Ansprüche, wobei der Keil aus einem nichtmagnetischen Material hergestellt ist.

6. Keil nach einem der vorhergehenden Ansprüche, ferner umfassend:
eine erste Aussparung (66A), die auf der ersten Seite zwischen der ersten Kontaktfläche und der zweiten Kontaktfläche angeordnet ist, und sich von einem ersten Ende des Keils axial nach innen erstreckt; und
eine zweite Aussparung (66B), die auf der ersten Seite zwischen der ersten Kontaktfläche und der zweiten Kontaktfläche angeordnet ist, und sich von einem zweiten Ende des Keils axial nach innen erstreckt.

7. Keil nach Anspruch 6, wobei eine Tiefe der ersten Aussparung gleich der Tiefe der zweiten Aussparung ist.

8. Keil nach Anspruch 7, wobei die Tiefe der ersten Aussparung und die Tiefe der zweiten Aussparung gleich einer Höhe der ersten Nase und einer Höhe der zweiten Nase sind.

9. Keil nach einem der vorhergehenden Ansprüche, wobei der Keil ein monolithisches Stück ist.

10. Keil nach einem der vorhergehenden Ansprüche, wobei die erste Seite eine im Allgemeinen glatte, ununterbrochene Fläche ist.

11. Rotor für einen Generator, der Folgendes umfasst:
eine Welle (36);
einen Rotorkern (38) der sich radial nach außen von der Welle befindet und eine Vielzahl von Stangen (40) aufweist, die sich axial entlang des Rotorkerns spannen;
eine Vielzahl von Windungen (42), die axial um jede der Vielzahl von Stangen gewickelt sind; und
eine Vielzahl von Keilen (48) nach einem der vorhergehenden Ansprüche, wobei jeder Keil zwischen zwei benachbarten Stangen der Vielzahl von Stangen positioniert ist, wobei jeder Keil einen im Allgemeinen dreieckigen Querschnitt aufweist, der sich axial entlang der Länge des Rotorkerns erstreckt.

12. Rotor nach Anspruch 11, wobei der Rotorkern vier Stangen aufweist, die sich axial entlang des Rotorkerns spannen.

## Revendications

1. Angle (48) destiné à être utilisé dans un rotor de générateur comprenant :
un corps d'angle s'étendant sur une longueur axiale et comprenant une section transversale généralement triangulaire ;
un premier côté (52) du corps d'angle s'étendant sur la longueur axiale du corps d'angle ;
un deuxième côté (54) du corps d'angle s'étendant sur la longueur axiale du corps d'angle et comprenant une surface généralement plate ;
un troisième côté (56) du corps d'angle s'étendant sur la longueur axiale du corps d'angle et comprenant une surface généralement plate, le troisième côté formant un angle de 90 degrés avec le deuxième côté et présentant une longueur égale au deuxième côté ;
une première surface de contact (60A) adjacente au deuxième côté au niveau d'une interface entre le premier côté et le deuxième côté ;
une seconde surface de contact (60B) adjacente au troisième côté au niveau d'une interface entre le premier côté et le troisième côté ;
une première patte (62A) s'étendant vers l'extérieur à partir de la première surface de contact au niveau d'un emplacement entre la première surface de contact et le premier côté ; et
une seconde patte (62B) s'étendant vers l'extérieur à partir de la seconde surface de contact au niveau d'un emplacement entre la seconde surface de contact et le deuxième côté, la seconde patte présentant une hauteur égale à celle de la première patte, **caractérisé en ce que** la première surface de contact et la première patte forment une configuration d'escalier entre le premier côté et le deuxième côté et la seconde surface de contact et la seconde patte forment une configuration d'escalier entre le premier côté et le troisième côté.

2. Angle selon la revendication 1, comprenant en outre :
au moins une ouverture s'étendant axialement (58) dans le corps d'angle pour réduire la masse de l'angle.

3. Angle selon la revendication 2, dans lequel l'au moins une ouverture s'étendant axialement est trois ouvertures dont une ouverture présente un diamètre supérieur à celui des deux autres ouvertures.

4. Angle selon la revendication 1, 2 ou 3, dans lequel une interface entre le deuxième côté et le troisième côté est une surface incurvée.

5. Angle selon une quelconque revendication précédente, dans lequel l'angle est composé d'un matériau non magnétique.

6. Angle selon une quelconque revendication précédente, comprenant en outre :
une première découpure (66A) située sur le premier côté entre la première surface de contact et la seconde surface de contact et s'étendant à partir d'une première extrémité de l'angle axialement vers l'intérieur ; et
une seconde découpure (66B) située sur le premier côté entre la première surface de contact et la seconde surface de contact et s'étendant à partir d'une seconde extrémité de l'angle axialement vers l'intérieur.

7. Angle selon la revendication 6, dans lequel une profondeur de la première découpure est égale à une profondeur de la seconde découpure.

8. Angle selon la revendication 7, dans lequel la profondeur de la première découpure et la profondeur de la seconde découpure sont égales à une hauteur de la première patte et une hauteur de la seconde patte.

9. Angle selon une quelconque revendication précédente, dans lequel l'angle est une pièce monolithique.

10. Angle selon une quelconque revendication précédente, dans lequel le premier côté est une surface généralement lisse non interrompue.

11. Rotor pour un générateur comprenant :
un arbre (36) ;
un noyau de rotor (38) radialement vers l'extérieur à partir de l'arbre et comprenant une pluralité de pôles (40) s'étendant axialement le long du noyau de rotor ;
une pluralité d'enroulements (42) enroulés axialement autour de chacun des pôles de la pluralité de pôles ; et
une pluralité d'angles (48) selon une quelconque revendication précédente, chaque angle étant positionné entre deux pôles adjacents de la pluralité de pôles, chaque angle présentant une section transversale généralement triangulaire qui s'étend axialement le long du noyau de rotor.

12. Rotor selon la revendication 11, dans lequel le noyau de rotor comprend quatre pôles s'étendant axialement le long du noyau de rotor.
